# EUROPEAN PATENT APPLICATION

(11) **EP 2 416 432 A1**
(43) Date of publication of application: **08.02.2012**
(21) Application number: 09842609.1
(22) Date of filing: 31.03.2009
(51) Int. Cl.: H01M 10/04

(54) **SECONDARY BATTERY AND BATTERY SYSTEM**

(71) Applicant: Mitsubishi Heavy Industries, Ltd., Tokyo 108-8215 (JP)
(72) Inventor: HASHIMOTO, Tsutomu, Tokyo 108-8215 (JP)
(74) Representative: Henkel, Breuer & Partner
(86) International application number: PCT/JP2009/056648
(87) International publication number: WO 2010/113254

(57) **Abstract**

A secondary battery in accordance with the present invention includes a square battery can 1 having a positive electrode terminal and a negative electrode terminal, an electrode assembly 9 arranged in the square battery can having a sheet-shaped positive electrode 2 electrically connected to the positive electrode terminal and a sheet-shaped negative electrode 3 electrically connected to the negative electrode terminal laminated with a separator interposed therebetween, a first and second auxiliary insulating sheets each having a substantially U-shaped cross-section in a surface in the same direction as a surface of the square battery can on which the positive electrode terminal and the negative electrode terminal are formed, and an insulating tape 10. The first and second auxiliary insulating sheets are arranged at opposite sides to sandwich the electrode assembly and connected by the insulating tape 10.

## Description

### [Technical Field]

The present invention relates to a secondary battery in which a positive electrode and a negative electrode are stacked or laminated with separators interposed therebetween, and a power feeding and storage system using the battery.

### [Background Art]

Among secondary batteries, which are rechargeable, in particular, lithium ion secondary batteries are widely used as power sources for home appliances because they have high energy density and high capacity. In recent times, the lithium ion secondary batteries have been attracting attention as power sources for electric vehicles, power sources for houses, and storage batteries for storing residual power of power plants, or the like.
The lithium ion secondary batteries may be classified into a wound-type lithium ion secondary battery, which may be called as a cylindrical-type lithium ion secondary battery and in which a pair of sheet-shaped positive and negative electrodes having a strip shape are stacked or laminated with a separator interposed therebetween in a spiral shape, and a stack-type lithium ion secondary battery in which a plurality of sheet-shaped positive electrodes and negative electrodes are stacked or laminated with a plurality of separators interposed therebetween.
In the stack-type lithium ion secondary battery, an electrode assembly constituted by the plurality of sheet-shaped positive electrodes and negative electrodes is generally encapsulated in a square battery can , which may be called as a prismatic can, having a substantially rectangular cross-section. Meanwhile, in the wound-type lithium ion secondary battery, the electrode assembly is encapsulated in a cylindrical battery can having a substantially circle-shaped cross-section, or encapsulated in a square battery can.

However, for the stack-type or wound-type lithium ion secondary battery, since the sheet-shaped positive electrode and negative electrode are stacked or laminated with the separator interposed therebetween, misalignment of the positive electrode and the negative electrode in the square battery can, i.e., a "a misaligned stack" may occur. When such a misaligned stack occurs, the positive electrode and the negative electrode contact each other, increasing the probability of failures such as a short circuit, or the like, occurring in the battery. In addition, since the square battery can is formed of a conductive material, insulation from the positive electrode and the negative electrode is needed. Accordingly, a technique of placing auxiliary sheets made of polypropylene with insulation properties on both end surfaces of the electrode assembly and fixing the sheets to the electrode assembly with a tape has been proposed (see Patent Document 1).
[Patent Document 1] Japanese Unexamined Patent Application Publication No. 2008-91099

### [Disclosure of the Invention]

### [Technical Problem]

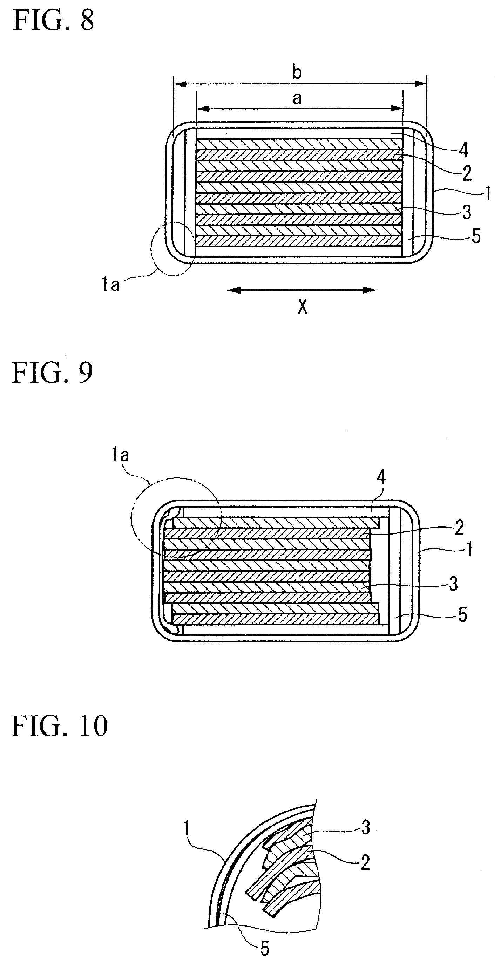

According to the proposal, it is said that it is possible to prevent the occurrence of the misaligned stack by fixing the auxiliary sheets to the electrode assembly by using tape, in addition to insulate the electrode assembly against the square battery can to a direction of the stack of the electrodes, which is called as "lamination direction". However, it is found that the misaligned stack cannot be sufficiently prevented according to the proposal, and that the secondary battery fails to perform at its full potential as designed. This will be described below with reference to FIGS. 8, 9 and 10.

FIG. 8 shows a cross-section of a square battery can 1, parallel to a surface on which a positive electrode terminal (not shown) and a negative electrode terminal (not shown) are formed. An electrode assembly, in which sheet-shaped positive electrodes 2 electrically connected to a positive electrode terminal via positive electrode tab and negative electrodes 3 electrically connected to a negative electrode terminal via negative electrode tab are stacked or laminated with separators (not shown) interposed therebetween, is inserted into the square battery can 1. Here, the positive electrodes 2 and the negative electrodes 3 are stacked or laminated in the lamination direction. In order to insulate the electrode assembly from the square battery can 1 made of a conductive material, as shown in the drawings, auxiliary sheets 4 and 5 made of polypropylene are arranged at four sides of the electrode assembly. When the electrode surface width "a" is equal to an internal length "b" along the long side direction X of a cross section of the square battery can, the electrodes adjacent to the corners 1 are compressed and deformed, since corners 1a of the square battery has a rounded shape. The compression and deformation leads to a breakage of the separator, or the like. As a result, probability of failures such as a short circuit, or the like, is increased. In order to avoid deformation of the electrodes, the electrode surface width "a" is designed to have a length slightly shorter than the internal length "b" along the long side direction X and not affected by the round-shaped corners 1a of the battery can.
In addition, since an electrolyte should be stored in the square battery can 1, a predetermined space must be provided between the electrode assembly and the inner surface of the square battery can 1. For this reason, the auxiliary sheet 5 is made of an insulating material and as thin as possible ensuring insulating properties, meaning that an insulator with extremely thin thickness without elasticity is used.

However, in this configuration, for example, in the case that the battery is used as a power source for an electric vehicle, and continuous vibrations are applied to the square battery can 1, tape is loosened under an environment dipped in the electrolyte even when the electrode assembly is fixed by the tape. Then, the auxiliary sheet 5 is deformed by the weight of the electrode assembly along the shape of the square battery can 1, and as shown in FIG. 9, the positive electrodes 2 and the negative electrodes 3 become misaligned, causing a misaligned stack in a direction along the surfaces of the positive and negative electrodes 2 and 3, i.e., in a direction perpendicular to the lamination direction. When the a misaligned stack occurs, as shown in FIG. 10 in which the corner 1a of the square battery can 1 is enlarged, the positive electrode 2 and the negative electrode 3 corresponding to ends of the electrode assembly are deformed along the shape of the square battery can 1. When vibrations are further applied, the separator might be broken. Therefore, failures such as a short circuit might be happened. Since the misalignment of stacks at a center of the electrode assembly is merely a slight parallel movement of the electrodes, deformation of the electrode such as bending cannot easily occur, and probability of causing a failure is very low.

In consideration of the above problems, it is an object of the present invention to provide a secondary battery that are capable of preventing deformation of electrodes at corners of a square battery can, and performing at its full potential as designed, even if the battery is subjected to continuous vibrations. Another object of the present invention is to provide a power feeding or storage system using the above-mentioned secondary battery.

### [Technical Solution]

In order to solve the problems, a secondary battery of the present invention has the following configuration.
That is, the secondary battery includes: a square battery can including a positive electrode terminal and a negative electrode terminal; an electrode assembly arranged in the square battery can, in which a sheet-shaped positive electrode electrically connected to the positive electrode terminal and a sheet-shaped negative electrode electrically connected to the negative electrode terminal are stacked or laminated with a separator interposed between them; a first auxiliary insulating sheet and a second auxiliary insulating sheet, each having a substantially U-shaped cross-section parallel to a surface of the square battery can on which the positive electrode terminal and the negative electrode terminal are formed; and an insulating tape, wherein the first auxiliary insulating sheet and the second auxiliary insulating sheet are arranged at opposite sides to sandwich the electrode assembly and connected by the insulating tape.

In addition, an electric vehicle as a power feeding system in accordance with the present invention includes: a secondary battery including a square battery can including a positive electrode terminal and a negative electrode terminal; an electrode assembly arranged in the square battery can, in which a sheet-shaped positive electrode electrically connected to the positive electrode terminal and a sheet-shaped negative electrode electrically connected to the negative electrode terminal are stacked or laminated with a separator interposed between them; a first auxiliary insulating sheet and a second auxiliary insulating sheet, each having a substantially U-shaped cross-section parallel to a surface of the square battery can on which the positive electrode terminal and the negative electrode terminal are formed; and an insulating tape, wherein the first auxiliary insulating sheet and the second auxiliary insulating sheet are arranged at opposite sides to sandwich the electrode assembly and connected by the insulating tape; and
a motor for driving wheels,
wherein the motor is driven by receiving electric power from the secondary battery.
The electric vehicle may be a vehicle that can be driven by electricity. Therefore, the electric vehicle may be a hybrid vehicle.

Further, a power storage system in accordance with the present invention includes: a secondary battery including a square battery can including a positive electrode terminal and a negative electrode terminal; an electrode assembly arranged in the square battery can, in which a sheet-shaped positive electrode electrically connected to the positive electrode terminal and a sheet-shaped negative electrode electrically connected to the negative electrode terminal are stacked or laminated with a separator interposed between them; a first auxiliary insulating sheet and a second auxiliary insulating sheet, each having a substantially U-shaped cross-section parallel to a surface of the square battery can on which the positive electrode terminal and the negative electrode terminal are formed; and an insulating tape, wherein the first auxiliary insulating sheet and the second auxiliary insulating sheet are arranged at opposite sides to sandwich the electrode assembly and connected by the insulating tape; and
a power generation equipment,
wherein the secondary battery receives electric power from the power generation equipment to store the power.
The power generation equipment may be a solar cell, a fuel cell, a windmill, thermal power generation equipment, hydroelectric generation equipment, nuclear power generation equipment, or any one of equipment for generating power, and a simple power generator installed at a vehicle, a bicycle, or the like. The power generation equipment is not limited to a power plant and it may be a power generator installed in a house.

The sheet-shaped electrodes adjacent to corners of the square battery can are supported by one side of an U shape of the substantially U-shaped auxiliary insulating sheet to prevent the electrodes from being deformed along the rounded parts of the corners of the square battery can. For a stack-type or wound-type secondary battery, for example, the above effect can be obtained from a stack-type lithium ion secondary battery or a wound-type lithium ion secondary battery.

A shape of the auxiliary insulating sheet is not limited to the substantially U shape, if two surfaces included in the shape connected directly and intersected each other at substantially right angles (i.e., substantially 90°) for supporting the plurality of sheet-shaped electrodes adjacent to the corners of the square battery can by the surfaces. Therefore, the shape of the auxiliary insulating sheet may be a substantially V shape, a substantially square shape or a substantially rectangular shape.
This shape may be formed by resin formed with a mold having a predetermined shape from the beginning, or a plurality of auxiliary insulating sheets may be combined as one body by melting, fusing, or the like.
Two auxiliary insulating sheets may be arranged to form angles of about 90° at the corners of the electrode assembly and then connected by the insulating tape to form the above-described shape substantially. In this case, the adhesion must be strong, since the plurality of sheet-shaped electrodes cannot be sufficiently supported by the two surfaces of the auxiliary insulating sheet, if adhesion of the insulating tape is weak.
The plurality of auxiliary insulating sheets, which partially overlap each other, may be connected to each other by the insulating tape.
In addition, one auxiliary insulating sheet may be folded and bent to form one shape. When the sheet is folded and bent, in order to prevent an inner part of the folded and bent corner from becoming rounded (crinkled), a cutout part may be formed at the folded and bent corner.
While some of the plurality of auxiliary insulating sheets may be formed of an insulating sheet without elasticity, the auxiliary insulating sheet for supporting the sheet-shaped electrodes to prevent the electrodes from entering the rounded parts of the corners of the square battery can must be made of a material with elasticity and with a sufficient thickness, at least.
In addition, in order to obtain sufficiently infiltration of an electrolyte into the electrode assembly, the auxiliary insulating sheet may have a function allowing infiltration of the electrolyte into the sheet. The auxiliary insulating sheet may have through-holes to provide the infiltration function.

The auxiliary insulating sheet may be a rigid auxiliary insulating plate having a thickness sufficient to prevent deformation such as bending.
The auxiliary insulating sheet arranged in a short side of the cross section of the square battery can may have substantially the same width as an internal length of the short side of the cross section of the square battery can. Because of the configuration, the auxiliary insulating sheet can be caught by the corners of the square battery can, even when a pressure is applied to the auxiliary insulating sheet from the electrode assembly due to vibration. As a result, it is possible to prevent the sheet-shaped electrodes from entering to the rounded parts of the corners of the square battery can, more securely. When the rigid auxiliary insulating plate is used, the deformation can be prevented even more securely.

It is preferable the insulating tape is made of a material that is not easily degraded by the electrolyte. In addition, it is preferable the adhesive of the insulating tape is made of a material that is not easily degraded by the electrolyte. For example, natural rubbers, synthetic rubbers, acryls, vinyl alkyl ethers, silicones, polyesters, polyamides, urethanes, ethylene-acrylic acid esters, styrene-butadiene block copolymers, styrene-isoprene block copolymers, or the like, can be used as the adhesive of the insulating tape. As an alternative, a method achieving fixation of the fixing the tape with the auxiliary insulating sheet by thermal fusion bonding with heat applied from outside without using an adhesive surface may be used.

The secondary batteries may be connected in series or in parallel to constitute assembled batteries.

### [Advantageous Effects]

In accordance with the present invention, deformation of sheet-shaped electrodes, corresponding to ends of the electrode assembly along the rounded corners of the square battery can, is able to be prevented, even if the square battery can is subjected to continuous vibrations or an electrode is swollen by repeated charging and discharging so that a tape for fixing the electrode assembly is loosen. As a result, it is possible to provide a secondary battery with low probability of failures and with a capability to perform at its full potential as designed. It is also possible to provide a power feeding and storage system using the secondary battery.

### [Brief Description of the Drawings]

FIG. 1 is a cross-sectional view of a square battery can of a secondary battery in accordance with a first embodiment of the present invention.
FIG. 2 is a view for explaining a position of a tape of the secondary battery in accordance with the first embodiment of the present invention.
FIG. 3 is a cross-sectional view of a square battery can of a secondary battery in accordance with a second embodiment of the present invention.
FIG. 4 is a cross-sectional view of a square battery can of a secondary battery in accordance with a third embodiment of the present invention.
FIG. 5 is a view for explaining a position of a tape of the secondary battery in accordance with the third embodiment of the present invention.
FIG. 6 is a view for explaining a position of a tape of a secondary battery in accordance with a fourth embodiment of the present invention.
FIG. 7 is a schematic view of a power feeding and storage system using a secondary battery in accordance with a fifth embodiment of the present invention.
FIG. 8 is a cross-sectional view of a square battery can of a conventional stack-type secondary battery.
FIG. 9 is a cross-sectional view of a square battery can of a stack-type secondary battery, showing a problem of a conventional art.
FIG. 10 is an enlarged cross-sectional view of the square battery can of the stack-type secondary battery, showing the problem of the conventional art.

### [Explanation of Reference]

1: Square battery can
2: Sheet-shaped positive electrode (Sheet-shaped electrode)
3: Sheet-shaped negative electrode (Sheet-shaped electrode)
4: Auxiliary insulating sheet in long side edge of cross section of square battery can
5: Auxiliary insulating sheet in short side edge of cross section of square battery can
6: Hollow part
7: Part of auxiliary insulating sheet in long side edge of cross section of square battery can
8: Part of auxiliary insulating sheet in short side edge of cross section of square battery can
9: Electrode assembly
10: Insulating tape
11: Secondary battery
12: Electric vehicle
13: Switchboard
14: House
15: Preliminary secondary battery
16: Control box
17: Power distribution system
18: Power generation equipment

### [Best Mode for Carrying out the Invention]

### (First Embodiment)

Hereinafter, a secondary battery in accordance with a first embodiment of the present invention will be described with reference to the accompanying drawings. The present invention is not limited to the following embodiments, but may be variously modified without departing from the scope of the invention.

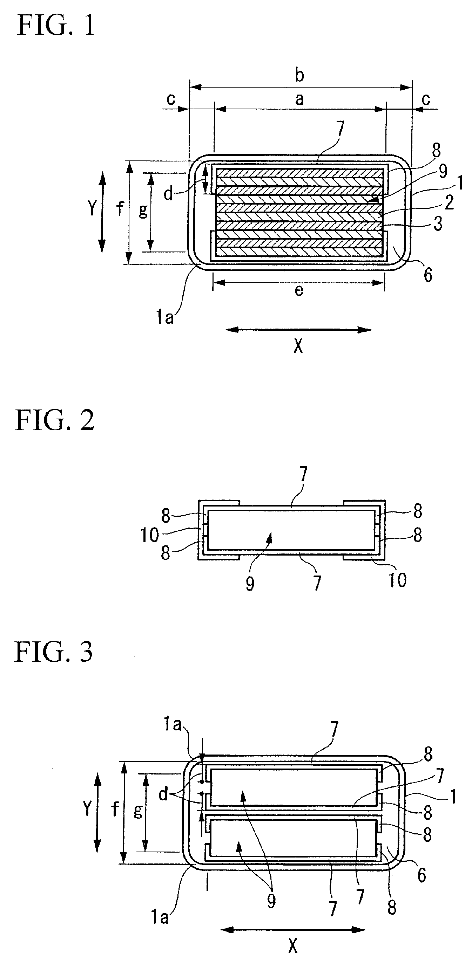

FIG. 1 is a cross-sectional view of a stack-type secondary battery. A square battery can 1 made of aluminum, or the like, includes an electrode assembly in which a plurality of substantially rectangular sheet-shaped positive electrodes 2 electrically connected to a positive electrode terminal (not shown) of the square battery can 1 via positive electrode tab and a plurality of substantially rectangular sheet-shaped negative electrodes 3 electrically connected to a negative electrode terminal (not shown) via negative electrode tab are laminated with separators (not shown) interposed therebetween. The square battery can 1 also includes two substantially U-shaped auxiliary insulating sheets arranged to sandwich the electrode assembly from long sides of a cross section parallel to a surface of the square battery can 1 on which the positive electrode terminal and the negative electrode terminal are formed. An angle of two sides which are in contact with each other, among three sides constituting the substantially U shape, may be about 90°. A position of the tape of FIG. 1 will be described with reference to FIG. 2.
A part 7 of the substantially U-shaped auxiliary insulating sheet arranged along the long side of the cross section of the square battery can and two parts 8 arranged along the short side of the cross section of the square battery can, may be formed by folding and bending one auxiliary insulating sheet with elasticity due to inexpensive manufacturing cost. In this case, the parts may be made of the same material.
The part 7 and the two parts 8 may be formed separately, and then, combined together by fusing. In this case, the parts may be made of different materials. With regard to prevention of bending of the sheet-shaped electrodes along the corners of the square battery can, while the parts 8 must have strength sufficient to support the sheet-shaped electrodes, the part 7 may be made of a material with no elasticity because the part 7 is not a part for supporting the sheet-shaped electrodes.

An electrode surface width "a" may be designed to be substantially the same as width of a flat surface along the long side direction X of the cross section of the square battery can 1, excluding the rounded parts of corners 1a, in order to obtain maximum electrical capacity.
An electrolyte is stored in a hollow part 6 in the square battery can 1. The length "c" of the hollow part 6 along the long side direction X satisfies the formula, c=(b-a)÷2, provided that an internal length along the long side direction X of the cross section of the square battery can is "b". The value of "c" is designed by adjusting the roundness of the corners to store sufficient amount of the electrolyte.

A length d of the part 8 along the short side direction Y of the cross section of the square battery can may be designed to satisfy the formula, (f-g)/2≤d≤f/2, provided that an internal length along the short side direction Y of the cross section of the square battery can is "f', and a width of the flat surface along the short side direction Y of the cross section of the square battery can, excluding the rounded parts of the corners 1 a, is "g", with regard to prevention of bending of the sheet-shaped electrodes (the sheet-shaped positive electrode 2 and the sheet-shaped negative electrode 3: hereinafter, referred to collectively as the sheet-shaped electrodes 2 and 3, when necessary) along the corners 1a of the square battery can 1. The lower limit (i.e., (f-g)/2) is set to shield the rounded parts of the corners 1a of the square battery can 1 securely. It prevents the sheet-shaped electrodes 2 and 3 from being curved by the rounded parts. The upper limit (i.e., f/2) is set to prevent the parts 8 of the substantially U-shaped auxiliary insulating sheets from overlapping each other. The overlapping of the parts 8 is not preferable because the angle formed by two connected sides of the three sides of the substantial U shape deviates from about 90°. However, when the deviation due to the overlapping is too small to be taken account, the parts may be designed to allow the overlapping.
The length "e" of the part 7 along the long side direction X of the cross section of the square battery can is substantially the same as the electrode surface width "a".

FIG. 2 shows tape positions. Insulating tapes 10 are adhered at two positions to connect two substantially U-shaped auxiliary insulating sheets so that the electrode assembly 9 is arranged inside an enclosure formed by the two substantially U-shaped auxiliary insulating sheets and the insulating tapes 10.
In FIG. 2, the insulating tapes 10 are adhered at two positions. Alternatively, one piece of tape may be wound around and adhered to the electrode assembly 9 with no cutout part to connect the two substantially U-shaped auxiliary insulating sheets arranged around the electrode assembly 9. In this case, since an adhesion surface of the tape is increased, the two substantially U-shaped auxiliary insulating sheets can be more securely connected to each other, increasing strength of the parts 8 supporting the plurality of sheet-shaped electrodes.
According to this configuration, since the plurality of sheet-shaped electrodes adjacent to the cross section of the electrode assembly 9 can be supported by the parts 8 with elasticity at an angle of about 90° with respect to the electrode surface, it is possible to effectively prevent the sheet-shaped electrode from entering the rounded parts of the corners of the square battery can 1 and be deformed.

Although this embodiment described a stack-type electrode assembly, the same effect may be obtained when a wound-type electrode assembly is encapsulated in a square battery can. The secondary battery may be, for example, a lithium ion secondary battery.

### (Second Embodiment)

A stack-type secondary battery in accordance with a second embodiment of the present invention will be described with reference to FIG. 3. In this embodiment, parts referred in the above embodiment are designated by the same reference numerals, and detailed descriptions thereof will not be repeated. The present invention is not limited to the following embodiment, but may be variously modified without departing from the scope of the invention.

In FIG. 3, unlike the first embodiment, the electrode assembly inserted into the square battery can 1 is divided into two parts, and each of two pairs of substantially U-shaped auxiliary insulating sheets is arranged to sandwich the electrode assemblies 9 respectively from the long side edges of the cross section of the square battery can.
In this case, a length "d" may be designed to satisfy the formula, (f-g)/2≤d≤f/4. Except for the configuration described above, the second embodiment is similar to the first embodiment.
In addition, the electrode assembly may be further divided. For example, when the electrode assembly is divided into N parts (N is an integer), N pairs of substantially U-shaped auxiliary insulating sheets are arranged to sandwich the electrode assemblies. In this case, a length d may be designed to satisfy the formula, (f-g)/2≤d≤f/(2×N). This is to avoid overlapping between the parts 8 of the substantially U-shaped auxiliary insulating sheets. However, when the effect of the overlapping is too small to influence the parts, the parts may be designed to allow the overlapping.

The insulating tapes may be adhered to the plurality of electrode assemblies as shown in FIG. 2 representing the first embodiment. Therefore, each electrode assembly is arranged inside an enclosure formed by the corresponding two substantially U-shaped auxiliary insulating sheets and the corresponding insulating tapes 10. Alternatively, after a pair of substantially U-shaped auxiliary insulating sheets are arranged to each of the plurality of electrode assemblies to sandwich each electrode assembly from the long side edges of the cross section of the square battery can 1, the plurality of or all electrode assemblies may be bundled by one piece of insulating tape with no cutout part winding and adhering around them. In this way, all the substantially U-shaped auxiliary insulating sheets, which are arranged at the plurality of electrode assemblies and wound by the insulating tape, are connected by the tape and the electrode assemblies are securely fixed without misaligned stacking. By fixing and bundling the electrode assemblies each other, the electrode assemblies can be easily inserted into the square battery can 1.

### (Third Embodiment)

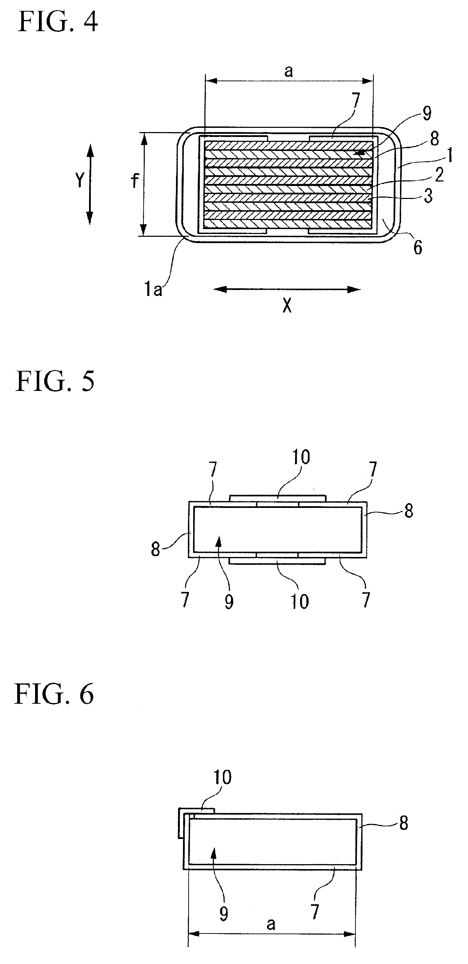

A stack-type secondary battery in accordance with a third embodiment of the present invention will be described with reference to FIGS. 4 and 5. In this embodiment, parts referred in the above embodiment are designated by the same reference numerals, and detailed descriptions thereof will not be repeated. The present invention is not limited to the following embodiment, but may be variously modified without departing from the scope of the invention.

In FIG. 4, unlike the first embodiment, two substantially U-shaped auxiliary insulating sheets arranged to sandwich the electrode assembly 9 are inserted from the short side edges of the cross section of the square battery can. A length of the part 8 along the short side direction Y is substantially equal to an internal length "f" along the short side direction Y of the cross section of the square battery can. A length of the part 7 arranged in the long side to sandwich the electrode assembly 9 may be 1/2 or less of the electrode surface width "a" such that the parts 7 of the substantially U-shaped auxiliary insulating sheets do not overlap each other. However, when the effect of the overlapping is too small to influence the parts, the parts may be designed to allow the overlapping. Except for this, the third embodiment is similar to the first embodiment.
In this configuration, the part 8 works as a center part connecting both sides among three sides of the substantial U shape so that all sheet-shaped electrodes 2 and 3 of the electrode assembly 9 can be supported by the part 8, making it possible to more securely prevent the a misaligned stack than in the first embodiment.

FIG. 5 shows tape positions. The insulating tapes 10 are adhered at two positions to connect the two substantially U-shaped auxiliary insulating sheets so that the electrode assembly 9 is arranged inside an enclosure formed by the two substantially U-shaped auxiliary insulating sheets and the insulating tapes 10.
In FIG. 5, the insulating tapes 10 are adhered at two positions. Alternatively, one piece of tape may be wound around and adhered to the electrode assembly 9 with no cutout part to connect the two substantially U-shaped auxiliary insulating sheets arranged around the electrode assembly 9. In this case, since an adhesion surface of the tape is increased, the two substantially U-shaped auxiliary insulating sheets can be more securely connected to each other to increase the strength of the parts 8 supporting the plurality of sheet-shaped electrodes 2 and 3.

Although, one electrode assembly 9 is provided in this embodiment, similar to the second embodiment, the electrode assembly may be divided into several parts and inserted into the square battery can 1. In this case, a length d of the part 8 may be substantially equal to f/N.

### (Fourth Embodiment)

A stack-type secondary battery in accordance with a fourth embodiment of the present invention will be described with reference to FIG. 6. In this embodiment, parts referred in the above embodiment are designated by the same reference numerals, and detailed descriptions thereof will not be repeated. The present invention is not limited to the following embodiment, but may be variously modified without departing from the scope of the invention.

In FIG. 6, unlike the first embodiment, one substantially rectangular auxiliary insulating sheet, when seen from the cross section of the square battery can 1, arranged to surround the electrode assembly 9 entirely is inserted into the square battery can 1. One auxiliary insulating sheet is folded and bent at three positions and both ends of the auxiliary insulating sheet are connected by an insulating tape 10 at one position to form a substantially rectangular shape. One auxiliary insulating sheet may be folded and bent at four positions and the insulating tape 10 connects both ends of the auxiliary insulating sheet at one position to form a substantially rectangular shape. In this case, a length "d" of the part 8 may be substantially equal to the electrode stack width, and a length "e" of the part 7 is substantially equal to the electrode surface width. Except for the feature described above, the fourth electrode is similar to the first embodiment.
In this configuration, since the electrode assembly 8 can be surrounded by one auxiliary insulating sheet, the manufacturing cost thereof can be reduced in comparison with the other embodiments.

Although, one electrode assembly 9 is provided in this embodiment, similar to the second embodiment, the electrode assembly may be divided into several parts and inserted into the square battery can 1. In this case, the length "d" of the part 8 may be substantially equal to f/N.

### (Fifth Embodiment)

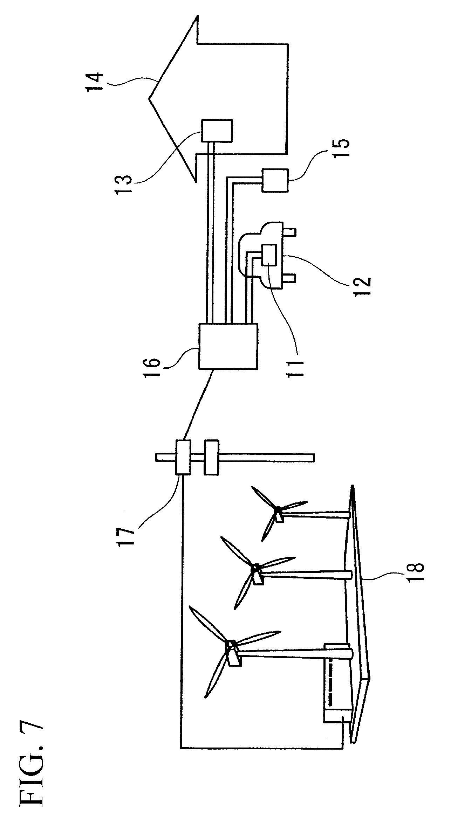

A power storage and feeding system using a secondary battery in accordance with a fifth embodiment of the present invention will be described with reference to FIG. 7. In this embodiment, parts referred in the above embodiment are designated by the same reference numerals, and detailed descriptions thereof will not be repeated. The present invention is not limited to the following embodiment, but may be variously modified without departing from the scope of the invention.

A secondary battery 11 installed in an electric vehicle 12 and a preliminary secondary battery 15 arranged outside a house 15 are the secondary batteries in accordance with the present invention described in the first to fourth embodiments, and for example, are stack-type lithium ion secondary batteries.

First, a power storage system will be described. Electric power generated from power generation equipment 18 such as wind power generation, thermal power generation, hydroelectric power generation, nuclear power generation, a solar cell, a fuel cell, or the like, is supplied to a control box 16 operated by a user via power distribution system 17. When the user operates the control box 16, the power transmitted from the power generation equipment 18 is supplied to any one of the secondary battery 11 as a drive power source of the electric vehicle 12, the preliminary secondary battery 15, and a switchboard 13. The preliminary secondary battery 15 or the secondary battery 11 of the electric vehicle 12 performs power charge/storage as the power is supplied. In order to use the preliminary secondary battery 15 as a preliminary power source when the power feeding from the power generation equipment 18 is stopped due to a disaster, or the like, it is preferable to sufficiently store electric power in the preliminary secondary battery 15.
The control box may be program-controlled such that the electric power is supplied to the switchboard 13 by day and to the preliminary secondary battery 15 or the secondary battery 11 of the electric vehicle 12 by night.

Next, a power feeding system will be described. The preliminary secondary battery 15 charged by the power storage system is electrically connected to the switchboard 13 in the house 14 via the control box 16. The switchbox 13 is electrically connected to home appliances such as an air conditioner, or a television, which are connected to plugs in the house 14. The user can select to drive the home appliances in the house 14 using power received from the power distribution system 17 or using power of the preliminary secondary battery 15 stored by the power storage system. The selection can be performed through the control box 16.
By a switching operation with the control box 16, electric power can be fed from the preliminary secondary battery 15 to the switchboard 13 to drive the home appliances, in case the preliminary secondary battery 15 is electrically connected to the switchboard 13.

The electric vehicle 12 can run by feeding electric power to a wheel-driving motor from the secondary battery 11 charged by the power storage system. The electric vehicle 12 may be a vehicle having wheels that can be driven by an electric motor or a hybrid vehicle.

Since the power storage and feeding system using the secondary battery in accordance with the present invention can securely prevent the misaligned stack and electrode curves from occurring in the corners of the square battery can due to vibration, one cause of failures of the secondary battery, even when the system is used in a vehicle to which a large amount of vibrations are applied as the power feeding system and in a country in which earthquakes frequently occur as the power feeding and storage system, it is possible to stably operate without trouble.

## Claims

1. A secondary battery comprising:
a square battery can including a positive electrode terminal and a negative electrode terminal;
an electrode assembly arranged in the square battery can, in which a sheet-shaped positive electrode electrically connected to the positive electrode terminal and a sheet-shaped negative electrode electrically connected to the negative electrode terminal are stacked or laminated with a separator interposed between them;
a first auxiliary insulating sheet and a second auxiliary insulating sheet, each having a substantially U-shaped cross-section parallel to a surface of the square battery can on which the positive electrode terminal and the negative electrode terminal are formed; and
an insulating tape,
wherein the first auxiliary insulating sheet and the second auxiliary insulating sheet are arranged at opposite sides to sandwich the electrode assembly and connected by the insulating tape.

2. The secondary battery according to claim 1, wherein the first and the second auxiliary insulating sheets are each formed by folding and bending both ends of one sheet-shaped part into a substantial U shape.

3. A secondary battery comprising:
a square battery can including a positive electrode terminal and a negative electrode terminal;
an electrode assembly arranged in the square battery can, in which a sheet-shaped positive electrode electrically connected to the positive electrode terminal and a sheet-shaped negative electrode electrically connected to the negative electrode terminal are stacked or laminated with a separator interposed between them;
a first auxiliary insulating sheet and a second auxiliary insulating sheet, each having substantially the same width as width of the electrode assembly along a short side of a surface of the square battery can, on which the positive electrode terminal and the negative electrode terminal are formed, or width smaller than the width of the electrode assembly along the short side, and arranged at opposite sides to sandwich the electrode assembly from sides corresponding to the short side;
a third auxiliary insulating sheet and a fourth auxiliary insulating sheet, each having substantially the same width as width of the electrode assembly along a long side of the surface or width smaller than the width of the electrode assembly along the long side, and arranged at opposite sides to sandwich the electrode assembly from sides corresponding to the long side; and
an insulating tape,
wherein the electrode assembly is arranged inside an enclosure formed by connecting the first, the second, the third, the fourth auxiliary insulating sheets and the insulating tape.

4. The secondary battery according to claim 3,
wherein each of the third auxiliary insulating sheet and the fourth auxiliary insulating sheet is divided into at least a first part and a second part,
the first part of the third insulating sheet and the first part of the fourth auxiliary insulating sheet are connected to the first auxiliary insulating sheet for forming one body by the first parts and the first auxiliary insulating sheet, and
the second part of the third auxiliary insulating sheet and the second part of the fourth auxiliary insulating sheet are connected to the second auxiliary insulating sheet for forming one body by the second parts and the second auxiliary insulating sheet.

5. The secondary battery according to claim 3,
wherein each of the first auxiliary insulating sheet and the second auxiliary insulating sheet is divided into at least a first part and a second part,
the first part of the first auxiliary insulating sheet and the first part of the second auxiliary insulating sheet are connected to the third auxiliary insulating sheet for forming one body by the first parts and the third auxiliary insulating sheet, and
the second part of the first auxiliary insulating sheet and the second part of the second auxiliary insulating sheet are connected to the fourth auxiliary insulating sheet for forming one body by the second parts and the fourth auxiliary insulating sheet.

6. The secondary battery according to claim 3, wherein the first, the second, the third and the fourth auxiliary insulating sheets are connected for forming one sheet shape.

7. An electric vehicle comprising:
a secondary battery including:
a square battery can including a positive electrode terminal and a negative electrode terminal;
an electrode assembly arranged in the square battery can, in which a sheet-shaped positive electrode electrically connected to the positive electrode terminal and a sheet-shaped negative electrode electrically connected to the negative electrode terminal are stacked or laminated with a separator interposed between them;
a first auxiliary insulating sheet and a second auxiliary insulating sheet, each having a substantially U-shaped cross-section parallel to a surface of the square battery can on which the positive electrode terminal and the negative electrode terminal are formed; and
an insulating tape,
wherein the first auxiliary insulating sheet and the second auxiliary insulating sheet are arranged at opposite sides to sandwich the electrode assembly and connected by the insulating tape; and
a motor for driving wheels,
wherein the motor is driven by receiving electric power from the secondary battery.

8. A power storage system comprising:
a secondary battery including:
a square battery can including a positive electrode terminal and a negative electrode terminal;
an electrode assembly arranged in the square battery can, in which a sheet-shaped positive electrode electrically connected to the positive electrode terminal and a sheet-shaped negative electrode electrically connected to the negative electrode terminal are stacked or laminated with a separator interposed between them;
a first auxiliary insulating sheet and a second auxiliary insulating sheet, each having a substantially U-shaped cross-section parallel to a surface of the square battery can on which the positive electrode terminal and the negative electrode terminal are formed;
and an insulating tape,
wherein the first auxiliary insulating sheet and the second auxiliary insulating sheet are arranged at opposite sides to sandwich the electrode assembly and connected by the insulating tape; and
a power generation equipment,
wherein the secondary battery receives electric power from the power generation equipment to store the power.
